# FASCICULE DE BREVET EUROPEEN

(11) **EP 4 031 358 B1**
(45) Date de publication et mention de la délivrance du brevet: **12.07.2023**
(21) Numéro de dépôt: 20785805.1
(22) Date de dépôt: 11.09.2020
(51) Int. Cl.: B29C 73/10, B29C 73/26

(54) **PROCÉDÉ DE RÉPARATION D'UNE PROTECTION THERMIQUE D'UNE STRUCTURE DE NACELLE**
VERFAHREN ZUR REPARATUR EINES THERMISCHEN SCHUTZES FÜR EINE GONDELSTRUKTUR
METHOD OF REPAIRING THERMAL PROTECTION FOR A NACELLE STRUCTURE

(30) Priorité: 16.09.2019 FR 1910184
(43) Date de publication de la demande: 27.07.2022
(73) Titulaire: Safran Nacelles, 76700 Gonfreville-l'Orcher (FR)
(72) Inventeur: CAVELIER, Erika, 77550 Moissy-Cramayel (FR); HELIN, Julien, 77550 Moissy-Cramayel (FR)
(74) Mandataire: Cabinet Beau de Loménie
(86) Numéro de dépôt international: PCT/FR2020/051571
(87) Numéro de publication internationale: WO 2021/053286

(56) Documents cités:
- EP-A2- 0 258 596
- EP-A2- 1 072 396
- WO-A1-2015/036716
- FR-A1- 3 042 779

## Description

### Domaine Technique

La présente invention se rapporte à un procédé de réparation d'une protection thermique endommagée recouvrant une structure de nacelle de turboréacteur d'aéronef.

### Technique antérieure

Les protections thermiques des nacelles de turboréacteur d'aéronef comprennent un matelas d'isolation thermique pris entre deux feuilles (aussi appelées « feuillards »). Lorsqu'un endommagement de la protection thermique est constaté, le matelas d'isolation thermique doit être réparé avant de pouvoir réutiliser le turboréacteur. Il est souhaitable de disposer d'une solution de réparation qui soit relativement simple et rapide à mettre en oeuvre afin notamment de pouvoir réaliser la réparation de la protection thermique lors d'une escale de l'aéronef de sorte à limiter la durée d'immobilisation de ce dernier. On connaît WO 2015/036716 qui divulgue un procédé de réparation d'une peau d'un panneau en matériau composite.

### Exposé de l'invention

L'invention concerne un procédé de réparation d'une protection thermique endommagée recouvrant une structure de nacelle de turboréacteur d'aéronef, la protection thermique endommagée comprenant un matelas d'isolation thermique présent entre une première feuille et une deuxième feuille, la deuxième feuille étant située du côté de la structure de nacelle, le matelas d'isolation thermique et la première feuille présentant chacun une zone de manque de matière, le procédé comprenant au moins :
- la découpe de fentes au travers de la première feuille, la zone de manque de matière de la première feuille étant présente entre les fentes,
- le positionnement d'un matelas d'isolation thermique de réparation dans la zone de manque de matière du matelas d'isolation thermique,
- le positionnement d'une feuille de réparation après positionnement du matelas d'isolation thermique de réparation, la feuille de réparation comprenant une partie centrale et des languettes latérales, un premier adhésif d'étanchéité étant appliqué sur les languettes latérales, le positionnement de ladite feuille de réparation étant réalisé en insérant les languettes latérales dans les fentes afin de les intercaler entre le matelas d'isolation thermique et la première feuille et les solidariser à la première feuille par le premier adhésif d'étanchéité, la partie centrale recouvrant le matelas d'isolation thermique de réparation après insertion des languettes latérales dans les fentes, et
- le dépôt d'un deuxième adhésif d'étanchéité sur le contour de la feuille de réparation ainsi positionnée.

L'invention propose de rapporter un matelas d'isolation thermique de réparation dans la zone endommagée du matelas et de recouvrir ce matelas de réparation par une feuille de réparation rapportée sur la première feuille endommagée. Dans l'invention, la feuille de réparation comprend des languettes qui sont insérées entre le matelas d'isolation thermique et la première feuille et qui sont solidarisées par collage à la première feuille par le premier adhésif d'étanchéité. Cette solution de fixation par insertion de languettes intercalées et collées permet d'avoir une réparation adaptée à l'environnement moteur en particulier en termes de tenue aux vibrations et d'étanchéité aux fluides tout en présentant une mise en oeuvre simple, ne nécessitant en particulier pas de rivetage et ne nécessitant pas non plus d'outils ou de fournitures spécifiques. La solution de réparation proposée présente en outre l'avantage d'être réalisable sans décrocher tout ou partie de la nacelle ou de l'ensemble propulsif de l'aile de l'aéronef, évitant ainsi un transport dans un atelier de maintenance et une procédure de démontage lourde. Cette solution permet la réparation de la protection thermique lors d'une escale de l'aéronef et limite ainsi la durée d'immobilisation de ce dernier.

Dans un exemple de réalisation, la feuille de réparation présente des découpes formant les languettes latérales.

Une telle caractéristique permet avantageusement de simplifier davantage encore la mise en oeuvre de la réparation.

En variante, les languettes latérales peuvent être formées par des éléments rapportés sur la feuille de réparation, par exemple soudés à celle-ci, et non plus par découpe de la feuille de réparation.

Dans un exemple de réalisation, la feuille de réparation comprend au moins quatre languettes présentes autour de la partie centrale, chacune de ces languettes étant insérée dans une fente distincte de la première feuille.

Dans un exemple de réalisation, les fentes sont découpées au travers de la première feuille avec un élément de protection intercalé entre une zone de découpe et le matelas d'isolation thermique.

Une telle caractéristique permet d'éviter tout risque d'endommagement du matelas d'isolation thermique lors de la découpe des fentes au travers de la feuille, améliorant ainsi davantage encore la qualité de la réparation effectuée.

Dans un exemple de réalisation, la deuxième feuille présente aussi une zone de manque de matière et le procédé comprend en outre :
- le positionnement d'une deuxième feuille de réparation dans la zone de manque de matière de la deuxième feuille et sa solidarisation à la deuxième feuille avant le positionnement du matelas d'isolation thermique de réparation, le matelas d'isolation thermique de réparation recouvrant une fois positionné la deuxième feuille de réparation.

Une telle caractéristique correspond au cas où la deuxième feuille a été endommagée et où une réparation de celle-ci est aussi effectuée.

Dans un exemple de réalisation, la protection thermique endommagée est une protection thermique et feu endommagée et recouvre une structure fixe interne de nacelle de turboréacteur d'aéronef. L'invention n'est toutefois pas limitée à la réparation de ce type de protection thermique. En effet, en variante, la protection thermique endommagée recouvre une structure fixe externe de nacelle de turboréacteur d'aéronef.

Par souci de concision, l'expression « matelas d'isolation thermique » sera désignée dans la suite de la description par le mot « matelas ».

### Brève description des dessins

[Fig. 1] La figure 1 est une coupe longitudinale d'un ensemble propulsif d'aéronef.
[Fig. 2] La figure 2 est une section illustrant, de manière schématique et partielle, une protection thermique endommagée destinée à être réparée par mise en oeuvre d'un exemple de procédé selon l'invention.
[Fig. 3] La figure 3 est une section illustrant, de manière schématique et partielle, la découpe des fentes au travers de la première feuille avec un élément de protection intercalé entre la zone de découpe et le matelas d'isolation thermique.
[Fig. 4] La figure 4 est une vue de face illustrant une structure possible pour les fentes de la première feuille.
[Fig. 5] La figure 5 est une section illustrant, de manière schématique et partielle, la protection thermique endommagée avec les fentes découpées au travers de la première feuille de chaque côté de la zone de manque de matière de la première feuille.
[Fig. 6] La figure 6 est une section illustrant, de manière schématique et partielle, le positionnement du matelas de réparation dans la zone de manque de matière du matelas.
[Fig. 7] La figure 7 est une photographie illustrant les fentes découpées au travers de la feuille avec le matelas de réparation positionné.
[Fig. 8] La figure 8 illustre la préparation d'un exemple de feuille de réparation destinée à être mise en oeuvre dans un exemple de procédé selon l'invention.
[Fig. 9] La figure 9 illustre un exemple de feuille de réparation destinée à être mise en oeuvre dans un exemple de procédé selon l'invention.
[Fig. 10] La figure 10 est une photographie illustrant le positionnement de la feuille de réparation.
[Fig. 11] La figure 11 est une section illustrant, de manière schématique et partielle, la structure obtenue après positionnement de la feuille de réparation dans le cadre d'un exemple de procédé selon l'invention.
[Fig. 12] La figure 12 est une vue de face illustrant, de manière schématique et partielle, la structure obtenue après positionnement de la feuille de réparation dans le cadre d'un exemple de procédé selon l'invention.
[Fig. 13] La figure 13 illustre, de manière schématique et partielle, le joint d'étanchéité formé par dépôt du deuxième adhésif d'étanchéité sur la réparation obtenue par mise en oeuvre d'un exemple de procédé selon l'invention.
[Fig. 14] La figure 14 est une section illustrant, de manière schématique et partielle, la réparation obtenue par mise en oeuvre d'un autre exemple de procédé selon l'invention dans lequel la deuxième feuille a aussi été réparée.

### Description des modes de réalisation

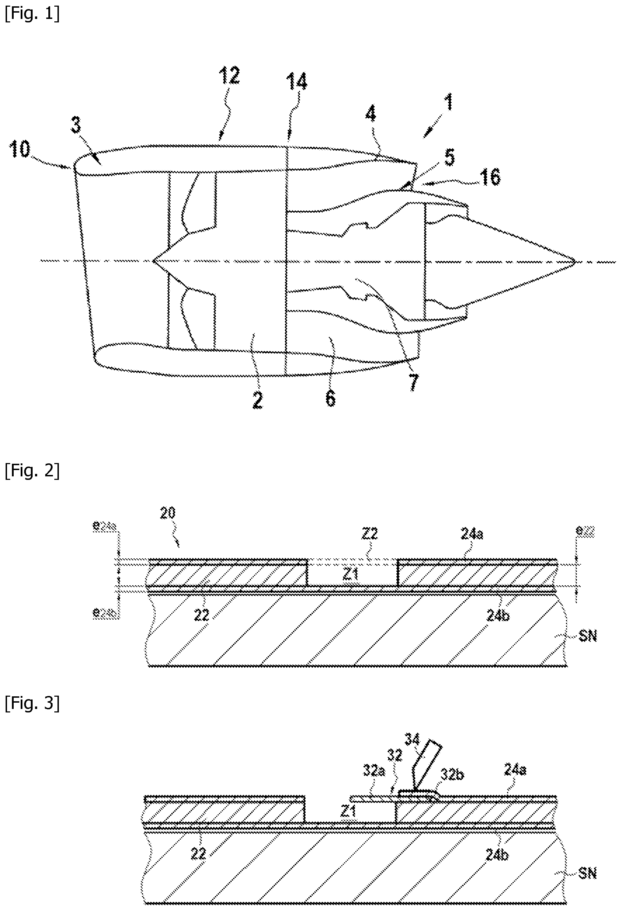

La figure 1 est une vue en coupe longitudinale d'un ensemble propulsif 1 d'aéronef, comportant au moins un turboréacteur 2 logé dans une nacelle 3. La nacelle 3 présente une structure sensiblement tubulaire comprenant une entrée d'air 10 en amont du turboréacteur 2, un ensemble intermédiaire 12 destiné à entourer une soufflante du turboréacteur et un ensemble arrière 14 pouvant intégrer des moyens d'inversion de poussée et destiné à entourer la chambre de combustion et tout ou partie des étages de compresseur et de turbine du turboréacteur. La nacelle 3 est terminée par une tuyère d'éjection 16 dont la sortie est située en aval du turboréacteur 2.

La nacelle 3 comprend une structure fixe externe 4 (ou « OFS » pour « Outer Fixed Structure ») et une structure fixe interne 5 (ou « IFS » pour « Inner Fixed Structure »). Ces deux structures sont concentriques et définissent une veine 6 annulaire dans laquelle de l'air froid est destiné à circuler lorsque le turboréacteur 2 est en fonctionnement. La structure fixe interne 5 constitue l'enveloppe externe du compartiment moteur 7 du turboréacteur 2. L'exemple illustré à la figure 1 concerne une nacelle 3 logeant un turboréacteur 2 double flux apte à générer, d'une part, un flux de gaz chauds (également appelé flux primaire) issu de la chambre de combustion du turboréacteur et circulant dans le compartiment moteur 7, et, d'autre part, un flux d'air froid (dit flux secondaire) issu de la soufflante et circulant à l'extérieur du compartiment moteur 7 à travers la veine 6 formée entre la structure fixe interne 5 et la structure fixe externe 4. Les deux flux sont éjectés du turboréacteur 2 par l'arrière de la nacelle 3 au travers de la tuyère d'éjection 16. Les structures fixes externe 4 et interne 5 de nacelle 3 sont revêtues de protection thermique. En particulier, la structure fixe interne 5 est soumise à de fortes contraintes thermiques et est généralement protégée par une protection thermique et feu, permettant d'isoler le reste de la nacelle du compartiment moteur 7 afin de le maintenir à une température acceptable.

La structure générale d'une protection thermique utilisée pour protéger les structures fixes 4 et 5 et l'ensemble intermédiaire 12 de nacelle 3 est connue en soi. La protection thermique comprend un matelas intercalé entre deux feuilles (aussi appelées « feuillards »). Lors de l'utilisation et de la soumission de la protection thermique à l'environnement moteur, celle-ci peut s'endommager et nécessiter une réparation avant de remettre en route du turboréacteur 2.

La figure 2 illustre la structure d'une protection thermique 20 endommagée destinée à être réparée par mise en oeuvre d'un exemple de procédé selon l'invention. Comme indiqué plus haut, la protection thermique 20 comprend un matelas 22 présent entre une première feuille 24a et une deuxième feuille 24b. Le matelas 22 peut être fibreux ou microporeux. Le matelas 22 peut comprendre des fibres inorganiques, comme des fibres de silice ou des fibres céramiques. D'une manière générale, le matelas 22 est réalisé dans un matériau adapté et présente une épaisseur suffisante afin d'assurer l'isolation thermique souhaitée vis-à-vis des contraintes thermiques rencontrées dans une nacelle 3 de turboréacteur en fonctionnement.

La première feuille 24a peut être étanche aux fluides et peut être résistante au feu notamment dans le cas où la protection thermique 20 revêt une structure fixe interne 5 ou l'ensemble intermédiaire 12 de nacelle 3. La protection thermique 20 ne constitue toutefois pas nécessairement une protection feu lorsque celle-ci revêt une structure externe 4 de nacelle 3. On ne sort bien entendu pas du cadre de l'invention si la protection est une protection thermique et feu et revêt une structure externe 4 de nacelle 3. La première feuille 24a peut être métallique, par exemple en acier inoxydable, ou en matériau composite. A titre d'exemple, l'épaisseur e₂₄ₐ de la première feuille 24a peut être inférieure ou égale à 1 mm, par exemple comprise entre 0,05 mm et 1 mm. Dans le cas du revêtement interne d'une structure fixe interne 5 de nacelle 3, la première feuille 24a est présente dans le compartiment moteur 7 et est soumise au flux de gaz chauds lorsque le turboréacteur 2 est en fonctionnement. La deuxième feuille 24b peut être métallique, par exemple en acier inoxydable, ou en matériau composite. La protection thermique 20 est solidarisée à la structure de nacelle SN par un système mécanique comme des fils frein ou des vis/écrous.

L'endommagement de la protection thermique 20 lors de son fonctionnement se matérialise par l'apparition de zones de manque de matière. On a représenté à la figure 2 le fait que le matelas 22 et la première feuille 24a présentent chacun une zone de manque de matière, respectivement notée Z1 et Z2. La zone de manque de matière Z2 de la première feuille 24a est superposée à la zone de manque de matière Z1 du matelas 22. Dans l'illustration de la figure 2, les zones de manque de matière Z1 et Z2 ont une forme régulière car elles ont au préalable subi un traitement préliminaire d'enlèvement de matière de sorte à leur donner une forme prédéfinie, ici une forme de quadrilatère en vue de la réparation. D'autres formes sont bien entendu possibles pour les zones de manque de matière Z1 et Z2. Dans le cas particulier où le matelas 22 est microporeux, des précautions particulières peuvent être prises après cet enlèvement de matière en collant des bandes fibreuses à la bordure du matelas 22 afin d'éviter tout risque de perte de fragments du matelas 22.

On vient de décrire une structure possible de protection thermique endommagée destinée à être réparée. Une succession d'étapes d'un exemple de procédé selon l'invention va maintenant être décrite.

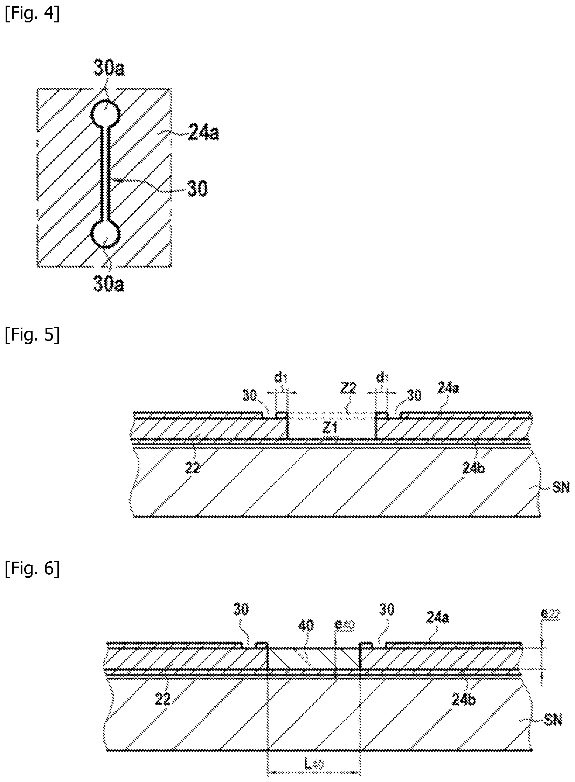

La figure 3 illustre la découpe des fentes 30 au travers de la première feuille 24a. Dans l'exemple illustré, un élément de protection 32 est au préalable intercalé entre le matelas 22 et la première feuille 24a. L'élément de protection 32 peut être une plaque, par exemple une plaque métallique. L'élément de protection 32 recouvre la zone de manque de matière Z1 du matelas 22 et s'étend au-delà de celle-ci. L'élément de protection 32 comprend une première région 32a recouvrant la zone de manque de matière Z1 du matelas 22 et une deuxième région 32b intercalée entre la première feuille 24a et le matelas 22. Lors de la découpe de chaque fente 30 au travers de la première feuille 24 par l'outil de coupe 34, l'élément de protection 32 est présent entre l'outil de coupe 34 et le matelas 22 de sorte à protéger le matelas 22 de tout risque d'endommagement par l'outil de coupe 34. La figure 4 illustre un exemple possible pour les fentes 30 réalisées au travers de la première feuille 24a. Les fentes 30 illustrées présentent à chaque extrémité un trou d'arrêt de crique 30a (« stop drill »). Les trous d'arrêt de crique 30a peuvent être réalisés avec un foret. En outre, la figure 4 illustre des fentes ayant une forme sensiblement rectiligne. D'autres formes sont envisageables comme des fentes en ligne brisée, par exemple en chevron.

Plusieurs fentes 30 sont formées dans l'épaisseur de la première feuille 24a, la zone de manque de matière Z2 de la première feuille 24a est présente entre les fentes 30. Les fentes 30 peuvent être formées à une distance d₁ de la zone de manque de matière Z2 de la première feuille 24a supérieure ou égale à 25 mm.

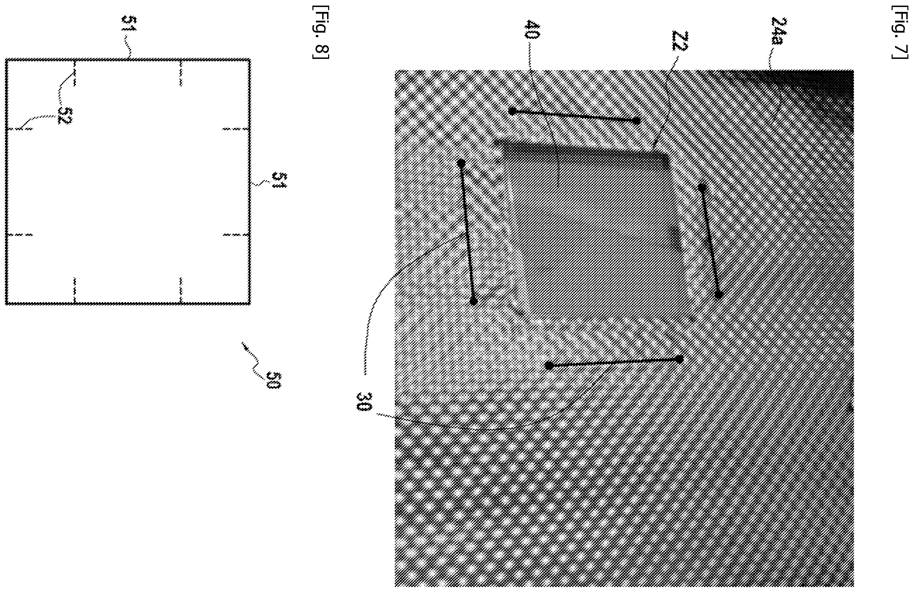

Dans l'exemple illustré, quatre fentes 30 ont été découpées au travers de la première feuille 24a (voir figure 7). Les fentes 30 peuvent comme illustré être situées autour de la zone de manque de matière Z2 de la première feuille 24a. Plus particulièrement, la zone de manque de matière Z2 peut présenter une forme de quadrilatère, ici de carré, et une fente 30 peut être présente en regard de chaque côté de ce quadrilatère. Les fentes 30 peuvent comme illustré être régulièrement réparties autour de la zone de manque de matière Z2 de la première feuille 24a. Le nombre de fentes 30 peut varier. En effet selon un autre exemple, seulement deux fentes peuvent être formées de part et d'autre de la zone de manque de matière Z2. Selon encore un autre exemple, trois fentes ou plus de quatre fentes peuvent être découpées au travers de la première feuille 24a.

Les figures 6 et 7 illustrent le positionnement du matelas de réparation 40 dans la zone de manque de matière Z1 du matelas 22 (voir aussi figure 7). Les figures proposées décrivent un exemple dans lequel la découpe des fentes 30 au travers de la première feuille 24a est réalisée avant le positionnement du matelas de réparation 40 mais on ne sort, bien entendu, pas du cadre de l'invention si le matelas de réparation 40 est d'abord positionné puis les fentes 30 découpées. Le matelas de réparation 40 a la même forme que la zone de manque de matière Z1 du matelas 22 et sensiblement les mêmes dimensions de sorte à être en contact ou présenter un espacement limité avec le matelas 22 n'affectant pas la capacité de protection thermique. La zone de manque de matière Z1 peut avoir une forme de quadrilatère, ici de carré, comme le matelas de réparation 40. De manière analogue à ce qui a été décrit plus haut dans le cas particulier où le matelas de réparation 40 est microporeux, des précautions particulières peuvent être prises après découpe du matelas de réparation 40 à la forme et aux dimensions souhaitées en collant des bandes fibreuses à la bordure du matelas de réparation 40 afin d'éviter tout risque de perte de fragments du matelas de réparation 40. On peut aussi arrondir les coins du quadrilatère défini par la zone de manque de matière Z2 de la première feuille 24a avant le positionnement du matelas de réparation 40 à l'aide par exemple d'une paire de ciseaux. Cela permet d'éviter tout risque que l'opérateur ne se blesse lors du positionnement du matelas de réparation 40 et que ce dernier ne soit endommagé lors de ce positionnement. Les caractéristiques décrites plus haut pour le matelas 22 sont applicables au matelas de réparation 40. Le matériau formant le matelas de réparation 40 peut être identique ou différent de celui formant le matelas 22. L'épaisseur e₄₀ du matelas de réparation 40 peut être sensiblement égale à l'épaisseur e₂₂ du matelas 22 ou différer de celle-ci, étant entendu que cette épaisseur e₄₀ demeure suffisante pour l'application de protection thermique visée. A titre d'exemple, la conductivité thermique rapportée à l'épaisseur (lambda/e₄₀ en W/(m².K)) du matelas de réparation 40 peut être inférieure ou égale à la conductivité thermique rapportée à l'épaisseur du matelas 22 et/ou la chaleur spécifique du matelas de réparation 40 peut être supérieure ou égale à celle du matelas 22. Le matelas de réparation 40 peut avoir une forme de patch, comme illustré. La largeur L₄₀ du matelas de réparation 40 peut être supérieure à l'épaisseur e₄₀ du matelas de réparation 40, voire supérieure ou égale au double de cette épaisseur e₄₀.

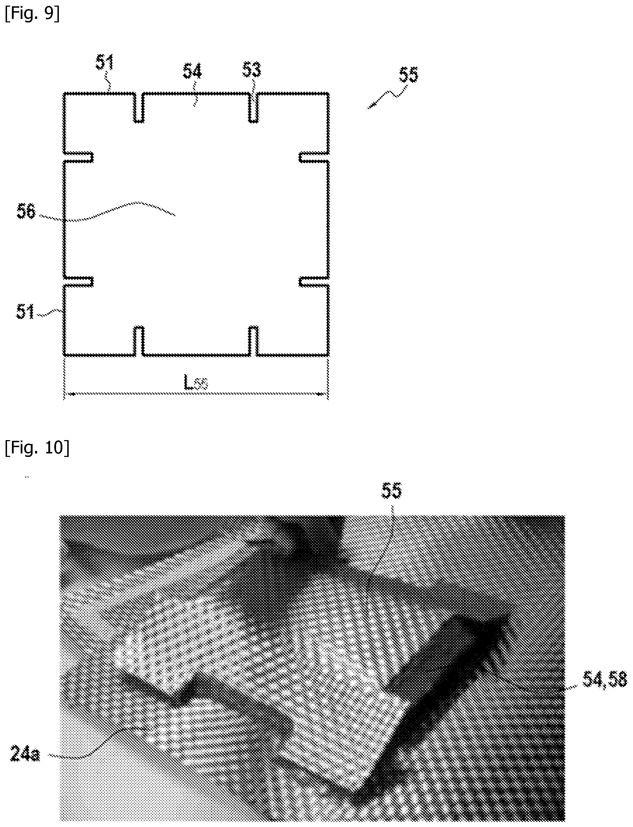

Après positionnement du matelas de réparation 40, on vient refermer la structure à réparer en rapportant la feuille de réparation 55 et en la fixant à la première feuille 24a. La feuille de réparation 55 a, au préalable, été préparée aux dimensions et à la forme souhaitée et est, en particulier, adaptée à recouvrir le matelas de réparation 40 et à présenter une partie insérable au travers des fentes 30. A ce sujet, les figures 8 et 9 illustrent la formation des languettes latérales 54 qui sont destinées à être insérées au travers des fentes 30. Ces languettes latérales 54 sont ici formées par découpe de bords d'une ébauche 50 de la feuille de réparation. Les languettes latérales 54 sont ici réalisées de manière monolithique avec le reste de la feuille de réparation. Dans l'exemple illustré, la feuille de réparation 55 présente une forme de quadrilatère, ici de carré. Dans cet exemple, des découpes 53 sont réalisées transversalement, par exemple perpendiculairement, à la circonférence 51 de l'ébauche 50 selon les lignes de découpe 52 illustrées à la figure 8. On réalise autant de languettes latérales 54 que de fentes 30. Dans l'exemple illustré, la feuille de réparation 55 comprend quatre languettes latérales 54 entourant une partie centrale 56 de la feuille de réparation 55. Une languette latérale 54 est présente sur chaque côté de la feuille de réparation 55 dans l'exemple illustré. On a représenté le cas de quatre languettes latérales 54 mais, comme indiqué plus haut pour les fentes 30, on ne sort pas du cadre de l'invention lorsque le nombre de languettes latérales 54 est différent de quatre. On a représenté des languettes latérales 54 ayant une forme de quadrilatère mais on ne sort pas du cadre de l'invention lorsque ces languettes ont une forme différente comme une forme triangulaire par exemple. On ne sort pas non plus du cadre de l'invention lorsque les languettes latérales sont présentes sur les coins de la feuille de réparation. De la même manière que pour les fentes 30, les languettes latérales 54 peuvent présenter à leur extrémité un trou d'arrêt de crique (« stop drill »). A titre d'exemple, l'épaisseur e₅₅ de la feuille de réparation 55 peut être inférieure ou égale à 1 mm, par exemple comprise entre 0,05 mm et 1 mm. La largeur L₅₅ de la feuille de réparation 55 peut être supérieure ou égale au double de son épaisseur e₅₅, par exemple supérieure ou égale à cinq fois cette épaisseur e₅₅.

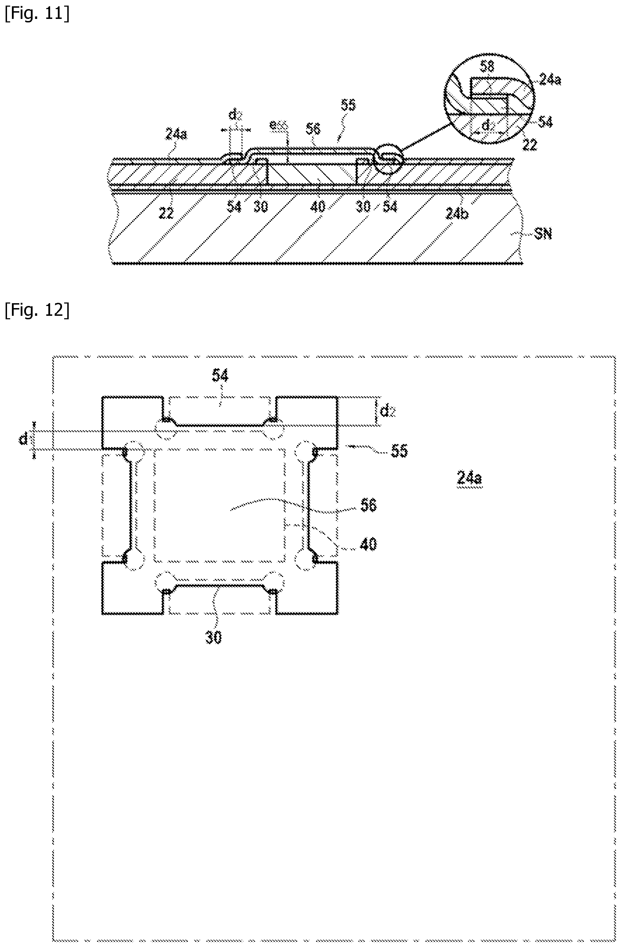

Les languettes latérales 54 peuvent être pliées par rapport au reste de la feuille de réparation 55 afin d'être insérées dans les fentes 30 ménagées au travers de la première feuille 24a. Avant cette insertion, les languettes latérales 54 sont revêtues d'un premier adhésif d'étanchéité 58 sur leur face destinée à être en regard de la première feuille 24a après insertion dans les fentes 30 (voir figures 10 et 11). Le premier adhésif d'étanchéité est, bien entendu, compatible des températures mises en oeuvre et constitue un adhésif connu en soi. Le premier adhésif d'étanchéité 58 est apte à lier les languettes latérales 54 à la première feuille 24a et à rendre cette liaison étanche aux fluides au contact de la protection thermique lorsque le turboréacteur 2 est en fonctionnement. Le premier adhésif d'étanchéité 58 peut être un mastic. A titre d'exemple non limitatif de premier adhésif d'étanchéité 58 utilisable, on peut citer utiliser le produit commercialisé sous la référence RTV106 par la société MG Chemicals, sous les références SILCOSET 152 ou AS2500 par la société ACC SILICONES. La figure 10 illustre le positionnement de la feuille de réparation 55. Pour ce faire, les languettes latérales 54 revêtues du premier adhésif d'étanchéité 58 sont pliées par rapport au reste de la feuille de réparation 55 et insérées dans les fentes 30 afin de les glisser sous la première feuille 24a et entre la première feuille 24a et le matelas 22 comme illustré à la figure 11. On notera qu'il est aussi possible de plier les bords des languettes par rapport au reste des languettes afin d'éviter l'endommagement du matelas 22. Le premier adhésif d'étanchéité 58 est présent entre les languettes latérales 54 et la première feuille 24a, une fois ces languettes latérales 54 insérées dans les fentes 30. La distance d₂ sur laquelle la première feuille 24a recouvre les languettes latérales 54 peut être supérieure ou égale à 25 mm.

La partie centrale 56 recouvre une partie de la première feuille 24a ainsi que le matelas de réparation 40. Comme plus haut pour le matelas de réparation 40, le matériau formant la feuille de réparation 55 peut être identique ou différent de celui formant la première feuille 24a tant qu'il assure la fonction souhaitée, par exemple la résistance au feu dans le cas du revêtement d'une structure fixe interne de nacelle.

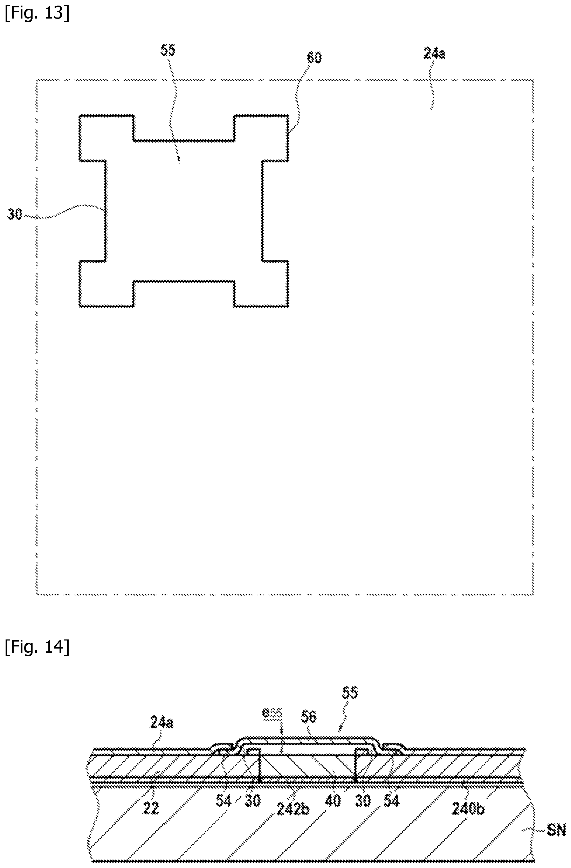

Une fois la feuille de réparation 55 positionnée et collée à la première feuille 24a, un deuxième adhésif d'étanchéité 60 est déposé sur le contour de la feuille de réparation 55 de sorte à réaliser un joint d'étanchéité entre la feuille de réparation 55 et la première feuille 24a (voir figure 13). Le deuxième adhésif d'étanchéité 60 est déposé sur les fentes 30 et sur la partie de la circonférence de la feuille de réparation 55 recouvrant la première feuille 24a. Le dépôt du deuxième adhésif d'étanchéité 60 peut être sous la forme d'un cordon. Le deuxième adhésif d'étanchéité 60 peut être identique ou différent du premier adhésif d'étanchéité 58. Le deuxième adhésif d'étanchéité est, bien entendu, compatible des températures mises en oeuvre et constitue un adhésif connu en soi. Le deuxième adhésif d'étanchéité 60 est apte à lier la feuille de réparation 55 à la première feuille 24a et à rendre cette liaison étanche aux fluides au contact de la protection thermique lorsque le turboréacteur 2 est en fonctionnement. Le deuxième adhésif d'étanchéité 60 peut être un mastic. A titre d'exemple non limitatif de deuxième adhésif d'étanchéité 60 utilisable, on peut citer utiliser le produit commercialisé sous la référence RTV106 par la société MG Chemicals, sous les références SILCOSET 152 ou AS2500 par la société ACC SILICONES. Dans le cas particulier où l'on répare une protection thermique de structure fixe interne de nacelle, le premier et le deuxième adhésif d'étanchéité peuvent être résistants au feu. En fonction du dommage, on notera qu'il est possible d'ajouter des fixations mécaniques comme par exemple du fil à freiner.

On vient de décrire un exemple où les zones de manque de matière Z1 et Z2 ont une forme de quadrilatère comme le matelas de réparation 40 et la feuille de réparation 55. On ne sort toutefois pas du cadre de l'invention si ces éléments ont d'autres formes, comme une forme arrondie, par exemple circulaire ou elliptique.

Par ailleurs, on vient de décrire un exemple où seuls la première feuille 24a et le matelas 22 nécessitent une réparation. Selon une variante de l'invention, on peut aussi procéder à une réparation de la deuxième feuille. On a illustré à la figure 14 le résultat de réparation obtenu en reprenant les mêmes références que dans les figures précédentes sauf pour la deuxième feuille qui est notée 240b et pour laquelle la deuxième feuille de réparation est notée 242b. Selon cette variante, il y a eu positionnement de la deuxième feuille de réparation 242b dans une zone de manque de matière de la deuxième feuille 240b et solidarisation de celle-ci, par exemple par collage, à la deuxième feuille 240b avant le positionnement du matelas de réparation 40, ce matelas de réparation 40 recouvrant une fois positionné la deuxième feuille de réparation 242b. Le reste des étapes de la réparation est effectué conformément à ce qui a été décrit plus haut.

L'expression « compris(e) entre ... et ... » doit se comprendre comme incluant les bornes.

## Revendications

1. Procédé de réparation d'une protection thermique (20) endommagée recouvrant une structure de nacelle (SN) de turboréacteur d'aéronef (2), la protection thermique endommagée comprenant un matelas (22) d'isolation thermique présent entre une première feuille (24a) et une deuxième feuille (24b ; 240b), la deuxième feuille étant située du côté de la structure de nacelle, le matelas d'isolation thermique et la première feuille présentant chacun une zone de manque de matière (Z1 ; Z2), le procédé comprenant au moins :
- la découpe de fentes (30) au travers de la première feuille, la zone de manque de matière de la première feuille étant présente entre les fentes,
- le positionnement d'un matelas (40) d'isolation thermique de réparation dans la zone de manque de matière du matelas d'isolation thermique,
- le positionnement d'une feuille de réparation (55) après positionnement du matelas d'isolation thermique de réparation, la feuille de réparation comprenant une partie centrale (56) et des languettes latérales (54), un premier adhésif d'étanchéité (58) étant appliqué sur les languettes latérales, le positionnement de ladite feuille de réparation étant réalisé en insérant les languettes latérales dans les fentes afin de les intercaler entre le matelas d'isolation thermique et la première feuille et les solidariser à la première feuille par le premier adhésif d'étanchéité, la partie centrale recouvrant le matelas d'isolation thermique de réparation après insertion des languettes latérales dans les fentes, et
- le dépôt d'un deuxième adhésif d'étanchéité (60) sur le contour de la feuille de réparation ainsi positionnée.

2. Procédé selon la revendication 1, dans lequel la feuille de réparation (55) présente des découpes (53) formant les languettes latérales (54).

3. Procédé selon l'une quelconque des revendications 1 ou 2, dans lequel la feuille de réparation (55) comprend au moins quatre languettes (54) présentes autour de la partie centrale (56), chacune de ces languettes étant insérée dans une fente (30) distincte de la première feuille (24a).

4. Procédé selon l'une quelconque des revendications 1 à 3, dans lequel les fentes (30) sont découpées au travers de la première feuille (24a) avec un élément de protection (32) intercalé entre une zone de découpe et le matelas (22) d'isolation thermique.

5. Procédé selon l'une quelconque des revendications 1 à 4, dans lequel la deuxième feuille (240b) présente aussi une zone de manque de matière et le procédé comprend en outre :
- le positionnement d'une deuxième feuille de réparation (242b) dans la zone de manque de matière de la deuxième feuille et sa solidarisation à la deuxième feuille avant le positionnement du matelas (40) d'isolation thermique de réparation, le matelas d'isolation thermique de réparation recouvrant une fois positionné la deuxième feuille de réparation.

6. Procédé selon l'une quelconque des revendications 1 à 5, dans lequel la protection thermique endommagée (20) est une protection thermique et feu endommagée et recouvre une structure fixe interne de nacelle de turboréacteur d'aéronef.

7. Procédé selon l'une quelconque des revendications 1 à 5, dans lequel la protection thermique endommagée (20) recouvre une structure fixe externe de nacelle de turboréacteur d'aéronef.

## Patentansprüche

1. Verfahren zur Reparatur eines beschädigten Hitzeschutzes (20), der eine Triebwerksgondelstruktur (SN) eines Turbinenstrahltriebwerks eines Luftfahrzeugs (2) bedeckt, wobei der beschädigte Hitzeschutz eine thermische Isoliermatte (22) umfasst, die zwischen einer ersten Folie (24a) und einer zweiten Folie (24b; 240b) vorliegt, wobei die zweite Folie sich auf der Seite der Triebwerksgondelstruktur befindet und die thermische Isoliermatte und die erste Folie jeweils eine materialfreie Zone (Z1; Z2) aufweisen, wobei das Verfahren zumindest umfasst:
- das Schneiden von Schlitzen (30) über die erste Folie, wobei die materialfreie Zone der ersten Folie zwischen den Schlitzen vorliegt,
- die Positionierung einer thermischen Isoliermatte (40) zur Reparatur in der materialfreien Zone der thermischen Isoliermatte,
- die Positionierung einer Reparaturfolie (55) nach der Positionierung der thermischen Isoliermatte zur Reparatur, wobei die Reparaturfolie einen zentralen Teil (56) und seitliche Laschen (54) umfasst, wobei ein erster Dichtungsklebstoff (58) auf die seitlichen Laschen aufgebracht wird, wobei die Positionierung der Reparaturfolie erfolgt, indem die seitlichen Laschen in die Schlitze eingeführt werden, um sie zwischen der thermischen Isoliermatte und der ersten Folie einzubringen und sie mit der ersten Folie durch den ersten Dichtungsklebstoff fest zu verbinden, wobei der zentrale Teil die thermische Isoliermatte zur Reparatur nach Einführung der seitlichen Laschen in die Schlitze bedeckt, und
- das Aufbringen eines zweiten Dichtungsklebstoffs (60) auf die Kontur der so positionierten Reparaturfolie.

2. Verfahren nach Anspruch 1, wobei die Reparaturfolie (55) Ausschnitte (53) umfasst, welche die seitlichen Laschen (54) bilden.

3. Verfahren nach einem der Ansprüche 1 oder 2, wobei die Reparaturfolie (55) zumindest vier Laschen (54) umfasst, die um den zentralen Teil (56) herum vorliegen, wobei jede dieser Laschen in einen unterschiedlichen Schlitz (30) der ersten Folie (24a) eingeführt wird.

4. Verfahren nach einem der Ansprüche 1 bis 3, wobei die Schlitze (30) über die erste Folie (24a) ausgeschnitten werden, wobei ein Schutzelement (32) zwischen einer Schnittzone und der thermischen Isoliermatte (22) eingebracht ist.

5. Verfahren nach einem der Ansprüche 1 bis 4, wobei die zweite Folie (240b) ebenfalls eine materialfreie Zone aufweist und das Verfahren ferner umfasst:
- die Positionierung einer zweiten Reparaturfolie (242b) in der materialfreien Zone der zweiten Folie und deren feste Verbindung mit der zweiten Folie vor der Positionierung der thermischen Isoliermatte (40) zur Reparatur, wobei die thermische Isoliermatte zur Reparatur, wenn sie positioniert ist, die zweite Reparaturfolie bedeckt.

6. Verfahren nach einem der Ansprüche 1 bis 5, wobei der beschädigte Hitzeschutz (20) ein beschädigter Hitze- und Feuerschutz ist und eine feste interne Struktur einer Triebwerksgondel eines Turbinenstrahltriebwerks eines Luftfahrzeugs bedeckt.

7. Verfahren nach einem der Ansprüche 1 bis 5, wobei der beschädigte Hitzeschutz (20) eine feste externe Struktur einer Triebwerksgondel eines Turbinenstrahltriebwerks eines Luftfahrzeugs bedeckt.

## Claims

1. A method for repairing a damaged thermal protection (20) covering a nacelle structure (SN) for an aircraft turbojet engine (2), the damaged thermal protection comprising a thermal insulation blanket (22) present between a first sheet (24a) and a second sheet (24b; 240b), the second sheet being located on the side of the nacelle structure, the thermal insulation blanket and the first sheet each having an area of lack of material (Z1; Z2), the method comprising at least:
- the cutting of slots (30) through the first sheet, the area of lack of material of the first sheet being present between the slots,
- the positioning of a repair thermal insulation blanket (40) in the area of lack of material of the thermal insulation blanket,
- the positioning of a repair sheet (55) after positioning of the repair thermal insulation blanket, the repair sheet comprising a central part (56) and lateral tabs (54), a first sealing adhesive (58) being applied on the lateral tabs, the positioning of said repair sheet being carried out by inserting the lateral tabs into the slots in order to interpose them between the thermal insulation blanket and the first sheet and to secure them to the first sheet by the first sealing adhesive, the central part covering the repair thermal insulation blanket after insertion of the lateral tabs into the slots, and
- the depositing of a second sealing adhesive (60) on the contour of the repair sheet thus positioned.

2. The method according to claim 1, wherein the repair sheet (55) has cutouts (53) forming the lateral tabs (54).

3. The method according to any one of claims 1 or 2, wherein the repair sheet (55) comprises at least four tabs (54) present around the central part (56), each of these tabs being inserted into a distinct slot (30) of the first sheet (24a).

4. The method according to any one of claims 1 to 3, wherein the slots (30) are cut through the first sheet (24a) with a protective element (32) interposed between a cutting area and the thermal insulation blanket (22).

5. The method according to any one of claims 1 to 4, wherein the second sheet (240b) also has an area of lack of material and the method further comprises:
- the positioning of a second repair sheet (242b) in the area of lack of material of the second sheet and its securing to the second sheet before the positioning of the repair thermal insulation blanket (40), the repair thermal insulation blanket covering once positioned the second repair sheet.

6. The method according to any one of claims 1 to 5, wherein the damaged thermal protection (20) is a damaged thermal and fire protection and covers an inner fixed structure of the aircraft turbojet engine nacelle.

7. The method according to any one of claims 1 to 5, wherein the damaged thermal protection (20) covers an outer fixed structure of the aircraft turbojet engine nacelle.
